# EUROPEAN PATENT APPLICATION

(11) **EP 4 631 850 A1**
(43) Date of publication of application: **15.10.2025**
(21) Application number: 24169277.1
(22) Date of filing: 09.04.2024
(51) Int. Cl.: B64C 3/56

(54) **WING FOR AN AIRCRAFT**

(71) Applicant: Airbus Operations GmbH, 21129 Hamburg (DE)
(72) Inventor: Schlipf, Bernhard, 21129 Hamburg (DE); Krey, Dennis, 21129 Hamburg (DE)
(74) Representative: Bird & Bird LLP - Hamburg

(57) **Abstract**

Disclosed is a wing (3) for an aircraft (1), comprising a fixed wing (5), a foldable wing tip portion (9) mounted to the fixed wing (5) rotatably about a folding axis (13) between an extended position (15) and a folded position (17), and a drive unit (24) for driving the foldable wing tip portion (9) for movement between the extended position (15) and the folded position (17), wherein the drive unit (24) comprises a rotary actuator (25) mounted to the fixed wing (5) and having at least one drive arm (27) rotatably driven about a rotation axis (29) and drivingly engaging the foldable wing tip portion (9). The object to provide a wing having a simple, reliable and space-efficient drive unit, is achieved in that one of the drive arm (27) and the foldable wing tip portion (9) comprises at least one groove (31) and the other one of the drive arm (27) and the foldable wing tip portion (9) comprises at least one spigot (35) drivingly engaging the groove (31).

## Description

The present invention relates to a wing for an aircraft, in particular to a foldable wing including a fixed wing and a foldable wing tip portion. A further aspect of the invention relates to a drive unit for such a wing. Yet a further aspect of the invention relates to an aircraft comprising such a wing and/or comprising such a drive unit.

Such a wing comprises a fixed wing for being mounted to a fuselage, and a foldable wing tip portion mounted to the fixed wing rotatably about a folding axis between an extended position, where the foldable wing tip portion extends as a continuous extension of the fixed wing preferably in a common plane with the fixed wing, and a folded position, where the foldable wing tip portion extends upwards or rearwards in order to reduce the overall span of the aircraft compared to the extended position. Specifically, when the foldable wing tip portion is foldable upwards, the folding axis preferably extends in a horizontal plane and/or in parallel to a chord line and/or in parallel to the wing surface and/or in a flight direction of the aircraft. Alternatively, when the foldable wing tip portion is foldable rearwards, the folding axis preferably extends in a vertical direction and/or in a wing depth direction and/or in a direction transverse or perpendicular to the wing surface and/or transverse or perpendicular to a flight direction.

Preferably, the foldable wing tip portion is mounted to the fixed wing via a hinge or hinges rotatably about a hinge axis between the extended position and the folded position. In this case, the folding axis corresponds to the hinge axis of the hinge. The hinge preferably comprises a tip hinge part mounted, preferably fixedly mounted, to the foldable wing tip portion and a wing hinge part mounted, preferably fixedly mounted, to the fixed wing and engaging the tip hinge part in a manner rotatable about the hinge axis. Preferably, the foldable wing tip portion is foldable upwards and the hinge axis is located at the upper leading edge portion of the fixed wing. Further preferably, the tip hinge part is in the form of a goose neck, so that the foldable wing tip portion in the folded position can be pivoted to a far inboard position above the upper surface of the fixed wing.

As an alternative to the hinge, the foldable wing tip portion might also be mounted to the fixed wing via a linkage, such as a four-bar linkage, rotatably about a momentary pole between the extended position and the folded position. In this case, the folding axis corresponds to the momentary pole of the linkage.

The wing further comprises a drive unit for driving the foldable wing tip portion for movement between the extended position and the folded position. The drive unit comprises a rotary actuator mounted to the fixed wing and having at least one drive arm rotatably driven about a rotation axis, preferably by a motor, and drivingly engaging the foldable wing tip portion. For example, the drive arm might be mounted or coupled to a rotating drive shaft driven by a motor. In particular, the drive unit might be in the form of or might comprise one or more geared rotary actuators (GRA). In such a way, the drive arm is configured to effect movement of the foldable wing tip portion between the extended position and the folded position upon rotation of the drive arm about the rotation axis.

Foldable wings are developed in order to reduce the space requirements of an aircraft during manoeuvring and parking on ground. As soon as the aircraft has landed the foldable wing tip portions of the wings are folded upwards or rearwards, thereby reducing the overall span of the aircraft.

Some known foldable wings have a drive unit including a drive arm that is directly or indirectly mounted with its distal end to the foldable wing tip portion, e.g. via a linkage. Other known foldable wings have a drive unit including two housing parts rotating relative to one another, one housing part mounted to the fixed wing and the other housing part mounted to the foldable wing tip portion.

The object of the present invention is to provide a wing having a simple, reliable and space-efficient drive unit.

This object is achieved in that one of the drive arm and the foldable wing tip portion comprises at least one groove, such as a slot, preferably extending radially with respect to the rotation axis or slightly curved away from the radial extension. The other one of the drive arm and the foldable wing tip portion comprises at least one spigot, such as a pin, preferably holding a roller, drivingly engaging the groove and preferably extending in parallel to the rotation axis. Preferably, the drive arm comprises the groove and the foldable wing tip portion comprises the spigot.

This relates to a very simple, compact, robust, reliable and cost-efficient drive unit that allows easy assembly and maintenance, since no high precision gear teeth are involved and assembly tolerances are rather low compared to a gear drive. Also, maintenance efforts can be essentially reduced. Further, different positions of the drive arm are possible and a dual load path design with two drive arms is enabled.

According to a preferred embodiment, the spigot or the groove is provided at a lever element of the foldable wing tip portion spaced apart from the folding axis. By such a lever, the foldable wing tip portion can be advantageously rotated by a reduced actuation force. As an alternative to the lever element, the spigot or the groove might be provided on a linkage, e.g. a four-bar linkage, that is coupled to the foldable wing tip portion.

In particular, it is preferred that the lever element is mounted to the structure of the foldable wing tip portion, such as a rib, and preferably extends towards the fixed wing at least when the foldable wing tip portion is in the extended position. In such a way, easy and advantageous actuation of the foldable wing tip portion via the leaver is enabled.

According to a preferred embodiment, the rotation axis of the drive arm is spaced apart, preferably parallelly spaced apart, from the folding axis. In such a way, an advantageous actuation kinematics is enabled.

According to a further preferred embodiment, the spigot engages the groove with a predefined play, preferably in a radial direction with respect to the rotation axis or along the longitudinal extension of the drive arm. This play enabled the rotation axis of the drive arm and the folding axis not being coaxial and allows to optimize the drive unit.

According to a further preferred embodiment, the groove is formed as a slot, in particular a long hole, preferably extending in a radial direction with respect to the rotation axis, so that the spigot can move radially within the slot when the drive arm is rotated to move the foldable wing tip portion. The slot therefore provides a radial play for the spigot that is required when the rotation axis of the drive arm and the folding axis are not coaxial.

According to an alternative embodiment, the groove defines an inner end position and an outer end position between which the spigot can move in a guided manner when the drive arm is rotated about the rotation axis. The inner end position and/or the outer end position might be defined by a hard stop, such as a closed end or a stopper, limiting travel of the spigot mechanically. Alternatively, the inner end position and the outer end position might not be defined by any hard stop but might simply relate to the ends of the travel path of the spigot within the groove. In particular, the inner end position might be defined by a hard stop in the form of end closed end of the groove, while the outer end position might be defined by an end of the travel path of the spigot within the groove, e.g. at the level of the opening of the groove, i.e. the end of the lateral guide, without the groove having any hard stop. Also, it might be possible that even when there is a hard stop, such as a closed end of the groove, the inner and/or outer end is not defined by the hard stop as the travel path of the spigot within the groove ends before the hard stop. The groove defines a center line which extends from the inner end position to the outer end position and along which the spigot moves between the inner and outer end positions. The groove has a curved form, wherein a distance between the center line and the rotation axis increases, preferably continuously increases, from the inner end position towards the outer end position. In such a way, a very smooth and efficient load transmission from the drive arm to the foldable wing tip portion is achieved. Further, compared to a traditional gear drive, the solution according to the invention relates to a very simple, robust, and cost-efficient drive unit, since no high precision gear teeth are involved and assembly tolerances are rather low compared to a gear drive. Also, maintenance efforts can be essentially reduced. Further, different positions of the drive arm are possible and a dual load path design with two drive arms is enabled.

According to a preferred embodiment, the groove has such a form that a distance between the center line and a first reference line increases, preferably increases continuously and/or overproportionately, from the inner end position towards the outer end position, the first reference line having a straight radial extension from the rotation axis and intersecting the inner end position of the groove. In such a way, a very smooth and efficient load transfer is achieved.

According to a preferred embodiment, an angle α between the first reference line and a tangent to the center line at the inner end position is between -30° and 45°, preferably between -10° and 20°, more preferred between -5° and 5°most preferred around 0°. In such a way, a very smooth and efficient load transfer is achieved.

According to a preferred embodiment, an angle β between a second reference line and a tangent to the center line at the outer end position is between 45° and 90°, preferably between 30° and 70°, more preferred between 55° and 65°most preferred around 60°, the second reference line having a straight radial extension from the rotation axis and intersecting the outer end position of the groove. In such a way, a very smooth and efficient load transfer is achieved.

According to a preferred embodiment, an angle γ between the first reference line and the second reference line is between 20° and 90°, preferably between 30° and 70°, more preferred between 40° and 50°most preferred around 45°. In such a way, a very smooth and efficient load transfer is achieved.

According to a further preferred embodiment, the groove has a convexly curved form with respect to the foldable wing tip portion. In this case, the spigot preferably moves mainly from the inner end position towards the outer end position, when the drive arm drives the foldable wing tip portion to move the foldable wing tip portion from the extended position towards the folded position. However, this does not necessarily mean that the spigot is at the inner end position when the foldable wing tip portion is in the extended position and that the spigot is at the outer end position when the foldable wing tip portion is in the folded position. Rather, it might also be possible and preferred that the spigot after reaching the outer end position moves back towards the inner end position to some preferably limited extent, before the foldable wing tip portion has reached the folded position. Similar might apply with respect to the extended position of the foldable wing tip portion. This relates to one possible design to achieve a very smooth and efficient load transfer.

According to an alternative preferred embodiment, the groove has a concavely curved form with respect to the foldable wing tip portion. In this case, the spigot preferably moves mainly from the outer end position towards the inner end position, when the drive arm drives the foldable wing tip portion to move the foldable wing tip portion from the extended position towards the folded position. However, this does not necessarily mean that the spigot is at the outer end position when the foldable wing tip portion is in the extended position and that the spigot is at the inner end position when the foldable wing tip portion is in the folded position. Rather, it might also be possible and preferred that the spigot after reaching the inner end position moves back towards the outer end position to some preferably limited extent, before the foldable wing tip portion has reached the folded position. Similar might apply with respect to the extended position of the foldable wing tip portion. This relates to another possible design to achieve a very smooth and efficient load transfer.

According to a further preferred embodiment, the groove has one or more locking positions, for the spigot to be temporarily locked, where the curvature essentially differs from the other areas of the groove. In such a way, temporary fixing of the drive arm vis-à-vis the foldable wing tip portion at certain positions is enabled.

In particular, it is preferred that a locking position is formed at the inner end position and/or at the outer end position. In such a way, a temporary fixing of the drive arm vis-à-vis the foldable wing tip portion at the end positions is enabled. Suitable locking positions might be able to lock the foldable wing tip portion in the extended position or in the folded position sufficiently, such that no latching device is required or that the latching device can be essentially downsized.

According to a further preferred embodiment, the spigot comprises a spigot roller for rolling engagement with the slot, in particular with the surface of the drive arm surrounding the slot. Preferably, the spigot roller has an axis of rotation aligned with the spigot axis of extension. By such a spigot roller, a smooth and low friction engagement between the spigot and the groove is achieved. The spigot roller might be mounted to the spigot by an eccentric bolt or bush for rigging the spigot roller in a desired position thereby precisely setting the extended and/or folded position of the foldable wing tip portion.

According to a preferred embodiment, the groove is open or is closed at an outer end, i.e. a distal end, of the drive arm. By the groove being open, the spigot can be easier inserted into the groove, which largely simplifies assembly of the wing.

According to a preferred embodiment, a bottom panel of the fixed wing at its outbound end has a cut-out through which the drive arm may pass when rotating. Preferably, the drive arm is entirely inside the fixed wing profile when the foldable wing tip portion is in the extended position, whereas when the drive arm is rotated to move the foldable wing tip portion to the folded position, the drive arm passes through the cut-out from inside the fixed wing profile to the outside. Preferably, the foldable wing tip portion comprises a closing panel for closing the cut-out when the foldable wing tip portion is in the extended position. Preferably, the closing panel is mounted to the lever element of the foldable wing tip portion.

According to a preferred embodiment, the drive unit comprises two rotating actuators as described before, which are arranged spaced from one another along the folding axis.

Alternatively, the drive unit might comprise a single rotating actuator but two drive arms as described before, which are driven by the rotating actuator and which are arranged spaced from one another along the folding axis. Preferably, at least two hinge stations, preferably three hinge stations are provided and preferably arranged in an alternating manner with the drive arms. By the two drive arms and/or the two hinge stations, redundant load paths can be obtained.

A further aspect of the present invention relates to a drive unit for the wing according to any of the afore-described embodiments. The features and effects described above in connection with the wing apply vis-à-vis to the drive unit. In particular, the drive unit comprises a rotary actuator configured for being mounted to the fixed wing and having at least one drive arm rotatably driven about a rotation axis and configured for drivingly engaging the foldable wing tip portion. The drive arm comprises at least one groove or at least one spigot configured for drivingly engaging at least one corresponding spigot or at least one corresponding groove at the foldable wing tip portion.

Yet a further aspect of the present invention relates to an aircraft comprising a wing according to any of the embodiment described above or to a drive unit according to any of the embodiment described above. The features and effects described above in connection with the wing and the drive unit apply vis-à-vis to the aircraft.

Hereinafter, embodiments of the invention are described in more detail by mean of a drawing. The drawing shows in
- Fig. 1: a perspective view of an aircraft according to the invention,
- Fig. 2: a detailed perspective view of a wing according to a first embodiment of the invention, with a view on the drive unit and the hinge,
- Fig. 3: a further detailed perspective view of the wing shown in Fig. 2, with a closer view on the drive unit and the hinge,
- Fig. 4: a side view of the drive unit of the wing shown in Figs. 2,
- Fig. 5: a side view of the wing shown in Fig. 2, showing five different stages of actuation and respective movement of the foldable wing tip portion between the extended position and the folded position, and
- Fig. 6: a detailed perspective view of a further embodiment of the wing including a closing panel.

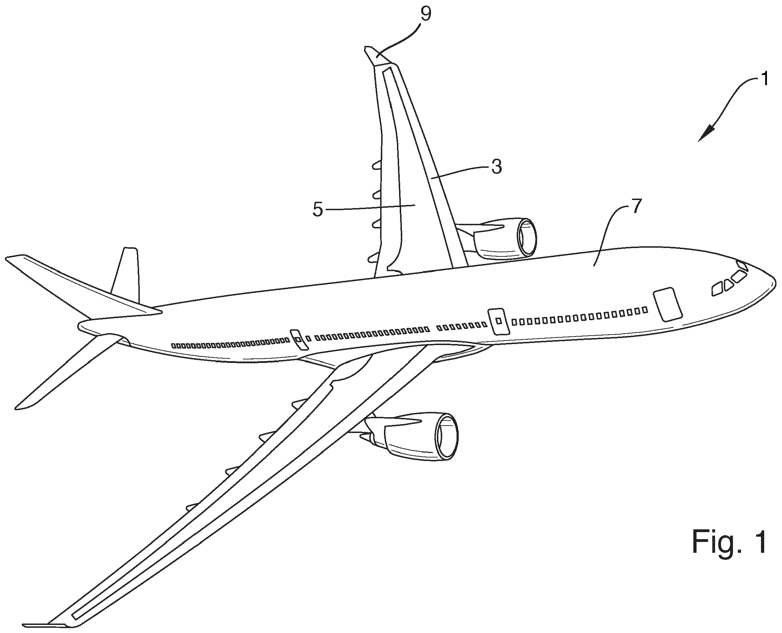

Fig. 1 shows an exemplary aircraft 1 according to an embodiment of the present invention. The aircraft 1 comprises a foldable wing 3 including a fixed wing 5 mounted to a fuselage 7, and a foldable wing tip portion 9 movably mounted to the fixed wing 5.

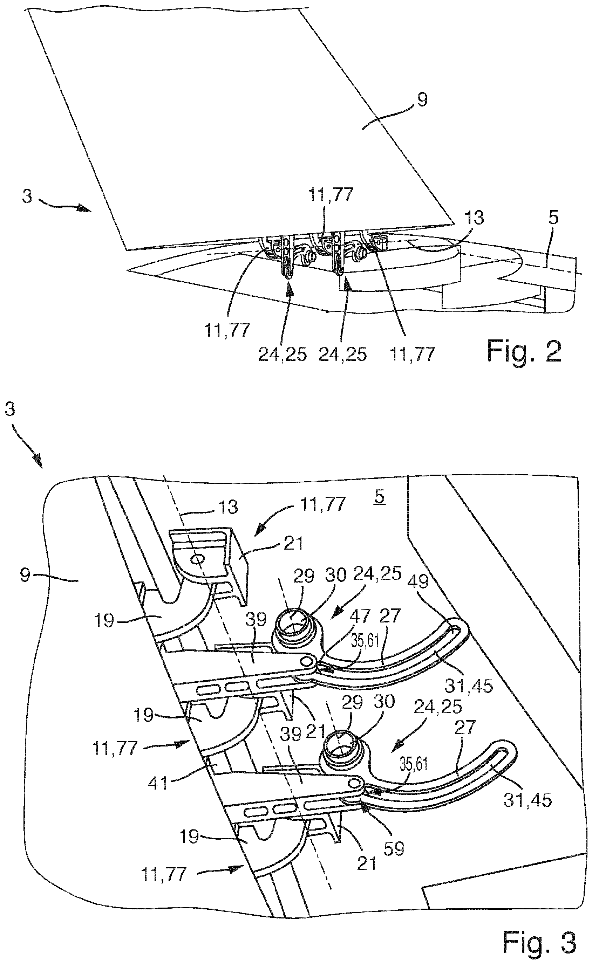

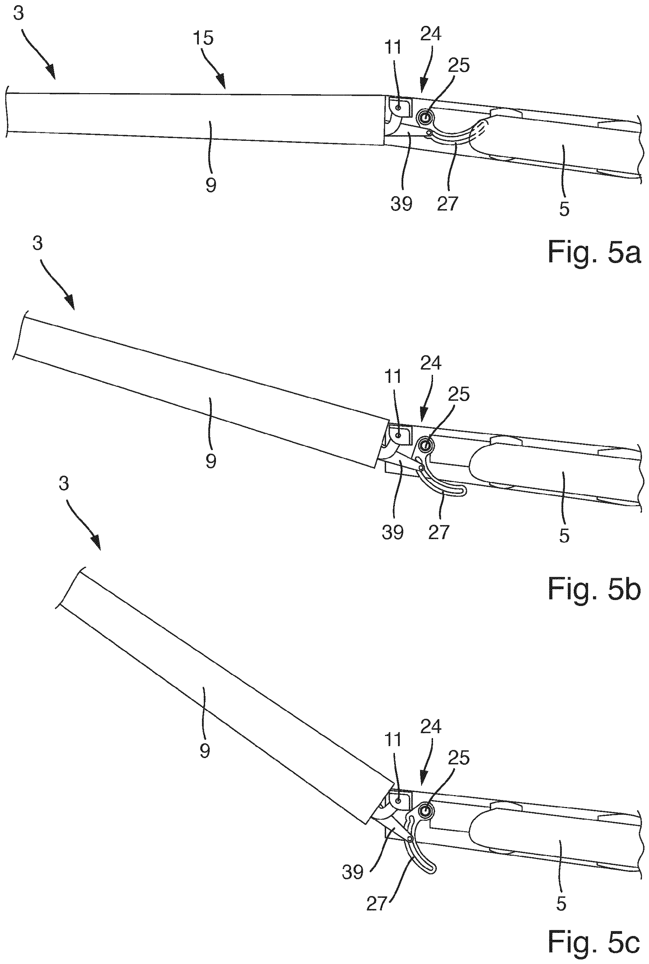

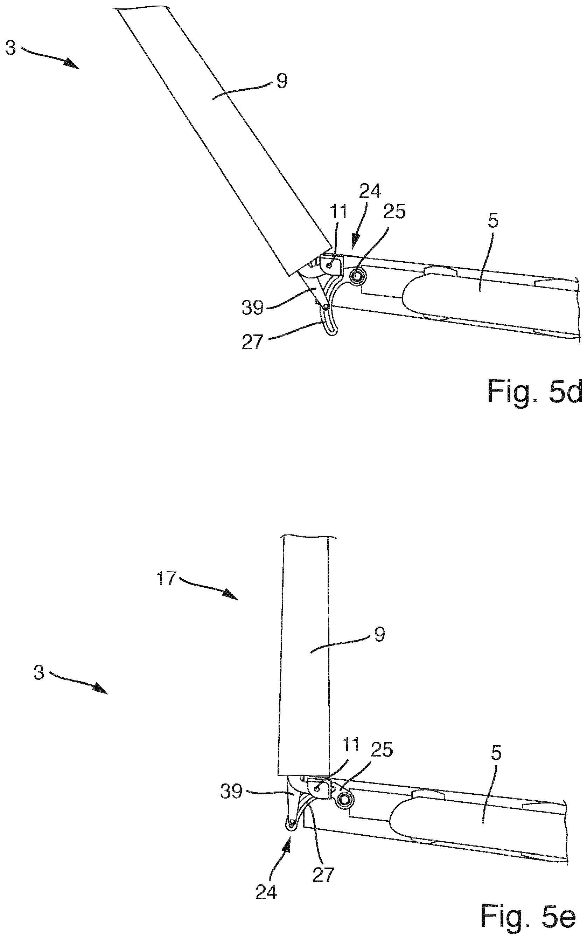

Figs. 2 to 6 illustrate two embodiments of the wing 3 of the aircraft 1 shown in Fig. 1 in further detail. As shown in Fig. 2, the foldable wing tip portion 9 is mounted to the fixed wing 5 via a hinge 11 rotatable about a folding axis 13 in the form of a hinge axis between an extended position 15 and a folded position 17. In the extended position 15 (see Fig. 5a) the foldable wing tip portion 9 extends as a continuous extension of the fixed wing 5 in a common plane with the fixed wing 5, wherein in the folded position 17 (see Fig. 5e) the foldable wing tip portion 9 extends upwards in order to reduce the overall span of the aircraft 1. The folding axis 13 extends in parallel to a chord line and in a flight direction of the aircraft 1. The hinge 11 comprises a tip hinge part 19 mounted to the foldable wing tip portion 9 and a wing hinge part 21 mounted to the fixed wing 5 and engaging the tip hinge part 19 in a manner rotatable about the folding axis 13. The folding axis 13 is located at the upper leading edge side of the fixed wing 5 and the tip hinge part 19 is in the form of a goose neck (see Fig. 3), so that the foldable wing tip portion 9 in the folded position 17 can be pivoted to a far inboard position above the upper surface of the fixed wing 5.

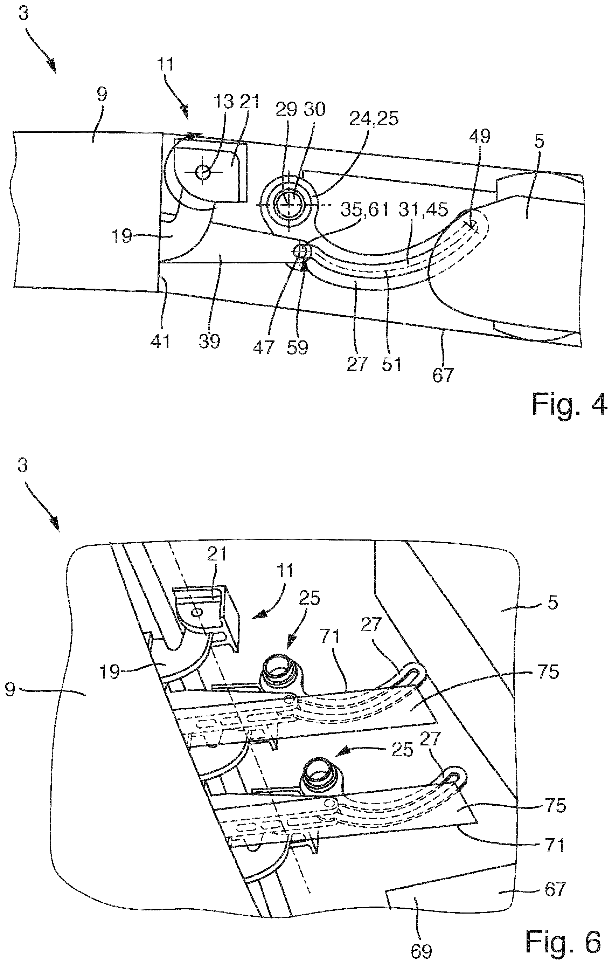

The wing 3 further comprises a drive unit 24, as shown in Figs. 3 and 4, for driving the foldable wing tip portion 9 for movement between the extended position 15 and the folded position 17. The drive unit 24 comprises a rotary actuator 25 mounted to the fixed wing 5 and having at least one drive arm 27 rotatably driven about a rotation axis 29 and drivingly engaging the foldable wing tip portion 9. Specifically, the drive arm 27 is mounted or coupled to a rotating drive shaft 30 driven by a motor (not shown). The rotation axis 29 of the drive arm 27 is parallelly spaced apart from the folding axis 13. The drive arm 27 is configured to effect movement of the foldable wing tip portion 9 between the extended position 15 and the folded position 17 upon rotation of the drive arm 27 about the rotation axis 29.

As shown in Figs. 3 and 4, the drive arm 27 comprises a groove 31 in the form of a slot 45 and the foldable wing tip portion 9 comprises a spigot 35 in the form of a pin drivingly engaging the groove 31 and extending in parallel to the rotation axis 29. The spigot 35 is provided at a lever element 39 of the foldable wing tip portion 9 spaced apart from the folding axis 13. The lever element 39 is mounted to a rib 41 of the foldable wing tip portion 9 and extends towards the fixed wing 5 when the foldable wing tip portion 9 is in the extended position 15.

The groove 31 is formed as a slot 45, in particular a long hole, extending in a longitudinal direction of the drive arm 27, so that the spigot 35 can move within the slot 45 when the drive arm 27 is rotated to move the foldable wing tip portion 9. The slot 45 therefore provides a radial play for the spigot 35 that is required when the rotation axis 29 of the drive arm 27 and the folding axis 13 are not coaxial. Thus, the spigot 35 engages the groove 31 with a predefined play along the longitudinal extension of the drive arm 27.

As visible in Figs. 3 and 4, the groove 31 defines an inner end position 47 and an outer end position 49 between which the spigot 35 can move in a guided manner when the drive arm 27 is rotated about the rotation axis 29. The inner end position 47 and the outer end position 49 in the present embodiment are defined by the closed end of the groove limiting travel of the spigot 35 mechanically. However, in other embodiments the inner end position 47 and the outer end position 49 might not be defined by any hard stop but might simply relate to the ends of the travel path of the spigot 35 within the groove 31. The groove 31 defines a center line 51 which extends from the inner end position 47 to the outer end position 49 and along which the spigot 35 moves between the inner and outer end positions 47, 49. The groove 31 has a curved form, wherein a distance between the center line 51 and the rotation axis 29 continuously increases from the inner end position 47 towards the outer end position 49.

As visible in Fig. 4, the groove 31 has such a form that a distance between the center line 51 and a first reference line increases continuously and overproportionately from the inner end position 47 towards the outer end position 49, the first reference line having a straight radial extension from the rotation axis 29 and intersecting the inner end position 47 of the groove 31. An angle a between the first reference line and a tangent to the center line 51 at the inner end position 47 is between -30° and 45°, preferably between -10° and 20°, more preferred between -5° and 5°most preferred around 0°. Further, an angle β between a second reference line and a tangent to the center line 51 at the outer end position 49 is between 45° and 90°, preferably between 30° and 70°, more preferred between 55° and 65°most preferred around 60°, the second reference line having a straight radial extension from the rotation axis 29 and intersecting the outer end position 49 of the groove 31. Also, an angle γ between the first reference line and the second reference line is between 20° and 90°, preferably between 30° and 70°, more preferred between 40° and 50°most preferred around 45°.

As visible in Figs. 3-5, the groove 31 has a convexly curved form with respect to the foldable wing tip portion 9. In this case, the spigot 35 moves mainly from the inner end position 47 towards the outer end position 49, when the drive arm 27 drives the foldable wing tip portion 9 to move the foldable wing tip portion 9 from the extended position 15 towards the folded position 17.

Fig. 4 also shows that the groove 31 has a locking position 59, for the spigot 35 to be temporarily locked, where the curvature essentially differs from the other areas of the groove 31. In the present embodiment, the locking position 59 is formed at the inner end position 47. In such a way, a temporary fixing of the drive arm 27 vis-à-vis the foldable wing tip portion 9 at the inner end positions 47 is enabled. By such a locking position 59 the foldable wing tip portion 9 can be locked in the extended position 15, such that no flight latching device is required or that the flight latching device can be essentially downsized.

As shown in Fig. 3 and 4, the spigot 35 comprises a spigot roller 61 for rolling engagement with the slot 45, specifically with the surface of the drive arm 27 surrounding the slot 45. The spigot roller 61 has an axis of rotation aligned with the spigot axis of extension. The spigot roller 61 might be mounted to the spigot 35 by an eccentric bolt or bush for rigging the spigot roller 61 in a desired position thereby precisely setting the extended position 15 and/or the folded position 17 of the foldable wing tip portion 9.

As shown in Figs. 3 and 4, in the present embodiment the groove 31 is closed at an outer end of the drive arm 27. However, in other embodiments the groove 31 might also be open at the outer end of the drive arm 27.

Fig. 6 shows a further embodiment of the wing 3 which differs from the first embodiment described before by including a cut-out 71 covered by a closing panel 75. Specifically, a bottom panel 67 of the fixed wing 5 at its outbound end 69 has a cut-out 71 through which the drive arm 27 may pass when rotating. The drive arm 27 is entirely inside the fixed wing profile when the foldable wing tip portion 9 is in the extended position 15, whereas when the drive arm 27 is rotated to move the foldable wing tip portion 9 to the folded position 17, the drive arm 27 passes through the cut-out 71 from inside the fixed wing profile to the outside. The foldable wing tip portion 9 comprises a closing panel 75 for closing the cut-out 71 when the foldable wing tip portion 9 is in the extended position 15. In the present embodiment, the closing panel 75 is mounted to the lever element 39 of the foldable wing tip portion 9.

As shown in Fig. 3, the drive unit 24 comprises two rotary actuators 25 with two drive arms 27 which are formed as described before and which are arranged spaced from one another along the folding axis 13. As also shown, three hinge stations 77 are provided and arranged in an alternating manner with the two drive arms 27.

By the invention as described above, a wing 3 with a very simple, compact, robust, reliable and cost-efficient drive unit 24 is provided that allows easy assembly and maintenance, since no high precision gear teeth are involved and assembly tolerances are rather low compared to a gear drive. Also, maintenance efforts can be essentially reduced. Further, different positions of the drive arm 27 are possible and a dual load path design with two drive arms 27 is enabled.

## Claims

1. A wing (3) for an aircraft (1), comprising
a fixed wing (5),
a foldable wing tip portion (9) mounted to the fixed wing (5) rotatably about a folding axis (13) between an extended position (15) and a folded position (17), and
a drive unit (24) for driving the foldable wing tip portion (9) for movement between the extended position (15) and the folded position (17),
wherein the drive unit (24) comprises a rotary actuator (25) mounted to the fixed wing (5) and having at least one drive arm (27) rotatably driven about a rotation axis (29) and drivingly engaging the foldable wing tip portion (9),
**characterized in that**
one of the drive arm (27) and the foldable wing tip portion (9) comprises at least one groove (31) and the other one of the drive arm (27) and the foldable wing tip portion (9) comprises at least one spigot (35) drivingly engaging the groove (31).

2. The wing (3) according to claim 1, wherein the spigot (35) or the groove (31) is provided at a lever element (39) of the foldable wing tip portion (9) spaced apart from the folding axis (13).

3. The wing (3) according to claim 2, wherein the lever element (39) is mounted to the structure of the foldable wing tip portion (9) and extends towards the fixed wing (5).

4. The wing (3) according to any of claims 1 to 3, wherein the rotation axis (29) of the drive arm (27) is spaced apart from the folding axis (13).

5. The wing (3) according to any of claims 1 to 4, wherein the spigot (35) engages the groove (31) with a predefined play.

6. The wing (3) according to any of claims 1 to 5, wherein the groove (31) is formed as a slot (45) extending in a radial direction with respect to the rotation axis (29).

7. The wing (3) according to any of claims 1 to 5, wherein the groove (31) defines an inner end position (47) and an outer end position (49) between which the spigot (35) can move in a guided manner when the drive arm (27) is rotated about the rotation axis (29),
wherein the groove (31) defines a center line (51) extending from the inner end position (47) to the outer end position (49),
the groove (31) has a curved form, wherein a distance between the center line (51) and the rotation axis (29) increases from the inner end position (47) towards the outer end position (49).

8. The wing (3) according to claim 7, wherein the groove (31) has such a form that a distance between the center line (51) and a first reference line increases from the inner end position (47) towards the outer end position (49), the first reference line having a straight radial extension from the rotation axis (29) and intersecting the inner end position (47) of the groove (31).

9. The wing (3) according to any of claims 1 to 8, wherein a bottom panel (67) of the fixed wing (5) has a cut-out (71) through which the drive arm (27) can pass when rotating,
wherein the foldable wing tip portion (9) comprises a closing panel (75) for closing the cut-out (71) when the foldable wing tip portion (9) is in the extended position (15), and
wherein the closing panel (75) is mounted to the lever element (39) of the foldable wing tip portion (9).

10. The wing (3) according to any of claims 1 to 9, wherein the groove (31) has one or more locking positions (59) for the spigot (35) to be temporarily locked, wherein in the locking position (59) the curvature of the groove (31) essentially differs from the curvature of the other areas of the groove (31).

11. The wing (3) according to any of claims 1 to 10, wherein the spigot (35) comprises a spigot roller (61) for rolling engagement with the groove (31).

12. The wing (3) according to any of claims 1 to 11, wherein the groove (31) has a convexly curved form or has a concavely curved form with respect to the foldable wing tip portion (9).

13. The wing (3) according to any of claims 1 to 12, wherein the groove (31) is open or is closed at an outer end (49) of the drive arm (27).

14. A drive unit (24) for the wing (3) according to any of claims 1 to 13, comprising
a rotary actuator (25) configured for being mounted to the fixed wing (5) and having at least one drive arm (27) rotatably driven about a rotation axis (29) and configured for drivingly engaging the foldable wing tip portion (9),
**characterized in that**
the drive arm (27) comprises at least one groove (31) or at least one spigot (35) configured for drivingly engaging at least one corresponding spigot (35) or at least one corresponding groove (31) at the foldable wing tip portion (9).

15. An aircraft (1) comprising the wing (3) according to any of claims 1 to 13, or comprising the drive unit (24) according to claim 14.
